# DEMANDE DE BREVET EUROPEEN

(11) **EP 0 916 545 A1**
(43) Date de publication de la demande: **19.05.1999**
(21) Numéro de dépôt: 97810812.4
(22) Date de dépôt: 31.10.1997
(51) Int. Cl.: B60K 31/00

(54) **Commande de vitesse**

(71) Demandeur: Pochon, Jean-Daniel, 1870 Monthey (CH)
(72) Inventeur: Pochon, Jean-Daniel, 1870 Monthey (CH)

(57) **Abrégé**

L'appareil est conçu pour la surveillance avec indications lumineuses et acoustiques de des écarts de vitesse dans les véhicules automobiles.

Des touches avec diférentes vitesses permettent l'introduction et la mémorisation des vitesses limites autorisées.

Un synthétiseur vocal confirme la valeur de la vitesse introduite.

Un affichage digitale permet la vision de la dernière valeur de vitesse introduite.

Des indications lumineuses avec clignotement de différentes couleurs (vert, jaune, rouge) signalent en continue au chauffeur les écarts entre la vitesse effective du véhicule et la vitesse limite autorisée.
- - jaune: : écarts dans la tolérance
- - vert: : écarts à la limite de la tolérance inférieure
- - rouge: : écarts à la limite de la tolérance supérieure
- - vert clignotant: : écarts hors tolérance inférieure
- - rouge clignotant: : écarts hors tolérance supérieure

Une indication acoustique signale au chauffeur lorsque la vitesse effective du véhicule est en-dessus de toutes tolérances.
- - signal acoustique: : écarts très en dehors de la tolérance supérieure

## Description

### APPLICATIONS :

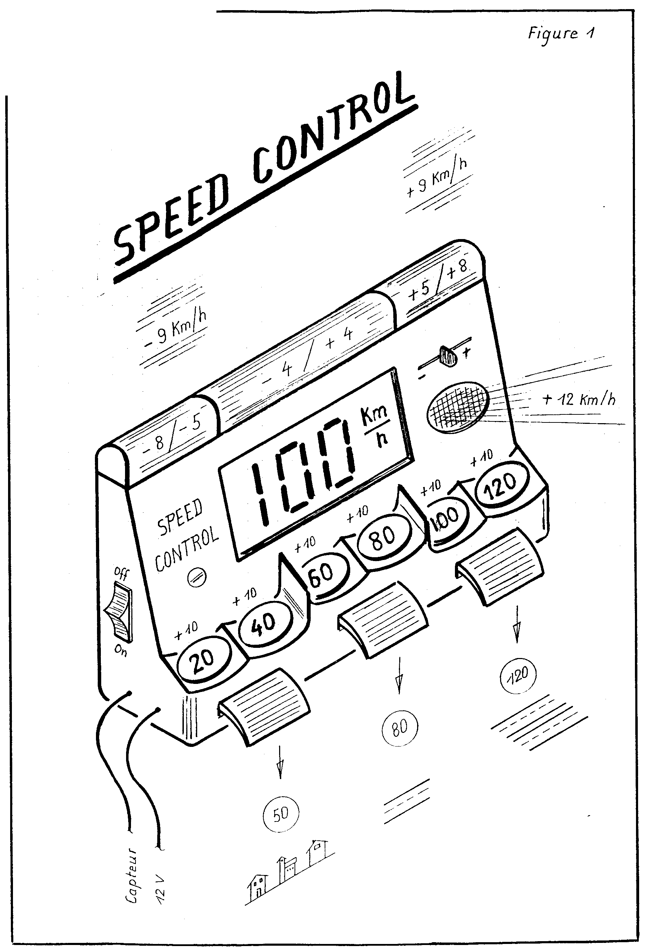

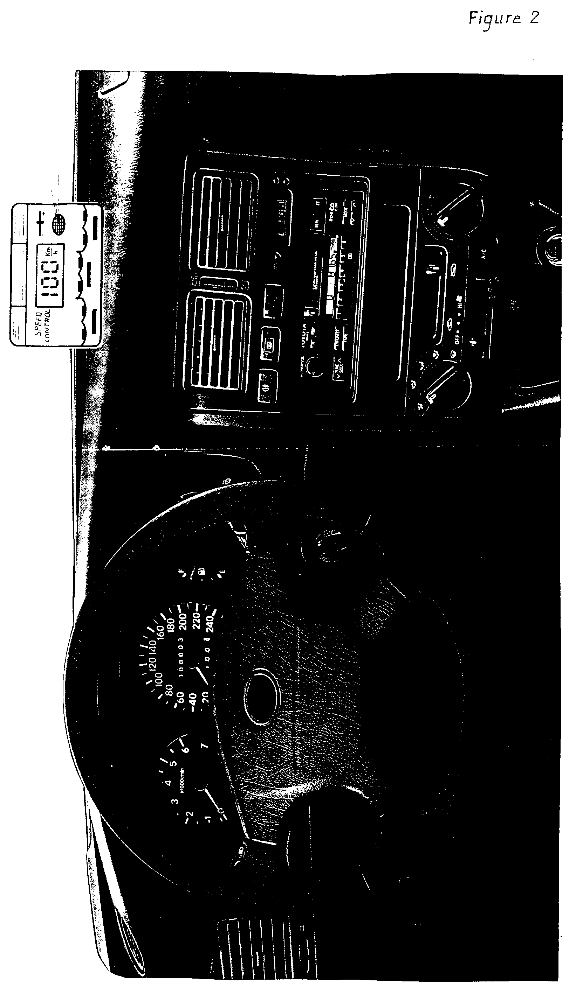

Ce dispositif de contrôle de vitesse est applicable à tous les véhicules automobiles dans le but de faciliter le respect des vitesses autorisées.
- Cas A) : Véhicules existants: Figure 1 / page 9
- Cas B) : Véhicules futurs: Figure 2 / page 10

### FONCTIONS ET BUT DE L'APPAREIL :

Ce dispositif a comme fonction d'avertir en continue et de donner une indication immédiate au chauffeur sur les écarts de vitesses effectives du véhicule et la vitesse limite autorisée.
Le but est de faciliter le chauffeur dans la surveillance de la vitesse limite admise pour ne pas être en infraction avec la loi sur la circulation routière et éviter de coûteuses amendes.

### PRINCIPE :

A l'aide de touches d'introduction des vitesses limites à contrôler, le chauffeur mémorise et affiche la vitesse limite autorisée à chaque signalisation de changement de vitesse. La valeur de la vitesse mémorisée est alors confirmée par le synthétiseur vocal.

Une indication lumineuse avec différentes couleurs (verte, jaune et rouge par exemple) plus avertissements acoustiques complémentaires permet la surveillance des écarts positifs ou négatifs de la vitesse limite mémorisée.

La lumière centrale jaune reste allumée lorsque la vitesse se situe dans une tolérance plus ou moins admise (- 4 / + 4 km/h par exemple) par rapport à la vitesse limite mémorisée.
La lumière verte s'allume lorsque la vitesse est inférieure (- 5 à - 8 km/h par exemple à la tolérance admise puis clignote lorsque la vitesse est très inférieure (à partir de - 9 km/h par exemple).
La lumière rouge s'allume lorsque la vitesse est supérieure (+ 5 à + 8 km/h par exemple) à la tolérance admise puis clignote lorsque la vitesse est très supérieure (à partir de + 9 km/h par exemple).
Un signal acoustique retentit lorsque la vitesse dépasse toutes les tolérances admises (à partir de + 12 km/h par exemple).

### CONCEPTION ET FONCTIONNEMENT DE L'APPAREIL

- Cas A) : Véhicules existants: Figure 1 / page 9
- Cas B) : Véhicules futurs: Figure 2 / page 10

L'appareil est constitué des éléments suivants:

### - Interrupteur général

### Cas A + B

Cette interrupteur permet l'arrêt ou la mise en service de l'appareil.

### - Touches d'introduction des vitesses limites

### Cas A + B

Ces touches permettent l'introduction, la mémorisation et l'affichage de la vitesse limite autorisée.
Les touches sont luminescentes pour l'utilisation la nuit.

L'appareil est conçu avec deux types d'introduction des vitesses:
- *Touches vitesses fixes:*

| vitesses en localités | sur routes départementales | sur les autoroutes |
|---|---|---|
| 50 km/h | 80 km/h | 120 km/h |
| (vitesses variables à programmer sur l'appareil selon pays) | | |

- *Touches vitesses variables:*
20, (30), 40, (50), 60, (70), 80, (90), 100, (110), 120, (130),.... (30) = 2 x pression sur touche 20.

### - Haut-parleur (synthétiseur) (seulement sur éxécution luxe)

### Cas A + B

Cet haut-parleur (synthétiseur vocal), avec réglage du volume, confirme vocalement dans la langue présélectionnée, la vitesse limite mémorisée après chaque introduction dans l'appareil d'une nouvelle valeur.

### - Sélectionneur de langues (Seulement sur version luxe)

### Cas A + B

Le sélectionneur de langues permet le choix entre plusieurs langues (français, allemand, anglais, italiens par exemple) sur le synthétiseur vocal.

### - Indicateur digital de la vitesse limite

### Cas A + B

L'indicateur digital affiche la dernière valeur introduite de la vitesse limite.

### - Bouton de synchronisation de la vitesse

### Cas A

Ce bouton permet lors de la première mise en service de l'appareil, la synchronisation de la vitesse transmise par l'intégrateur sur l'appareil et la vitesse effective sur le compteur du véhicule pour tenir compte des différences du nombre d'impulsions émises en raison du diamètre des roues d'un véhicule à l'autre par exemple ou pour d'autres facteurs.

### - Capteur d'impulsions ou transmetteur

### 1) Véhicules avec compteurs à câbles:

### Cas A + B)

Ce capteur (magnétique, électrique ou électronique) monté sur un élément en rotation (câble de compteur, arbre de roue par exemple) transmet les impulsions à l'intégrateur pour la calculation de la vitesse.

### 2) Véhicules avec compteurs électroniques:

### Cas A + B)

Ce transmetteur (magnétique, électriques, électronique,) monté et relié directement ou indirectement sur l'instrumentation de mesure de vitesse du véhicule transmet les valeurs nécessaires (impulsions, tension, courant,) à l'intégrateur pour la calculation de la vitesse.

### - L'intégrateur

### Cas A +B)

L'intégrateur transforme les impulsions ou valeurs (volts / ampères) reçues du capteur d'impulsions en vitesse effective (km/h ou milles/h) du véhicule.

### - Le calculateur

### Cas A + B

Le calculateur de l'appareil effectue alors la comparaison entre la dernière valeur mémorisée (vitesse limite) et la valeur transmise par l'intégrateur (vitesse effective). Selon les écarts entre la vitesse limite et la vitesse effective, les différentes indications lumineuses et acoustiques sont activées.

### - Indicateur lumineux combiné de surveillance de la vitesse

### Cas A + B

Lorsque l'écart positif ou négatif de vitesse se situe dans une fourchette tolérable (+ / - 4 km/h par exemple), une indication lumineuse jaune se maintient allumée et confirme au chauffeur que la vitesse effective du véhicule est correcte.

| |
|---|
| Jaune |
| (-4 / + 4 km/h) |
| vitesse à l'intérieur de la tolérance |

Si la vitesse effective du véhicule ralentit dans une certaine tolérance (entre - 8 et - 5 km/h par exemple), une indication lumineuse verte s'allume pour signaler au chauffeur que la vitesse est trop lente.
Si la vitesse effective du véhicule augmente dans une certaine tolérance (entre + 5 et + 8 km/h par exemple), une indication lumineuse rouge s'allume pour signaler au chauffeur que la vitesse est trop rapide.

| | |
|---|---|
| Vert | Rouge |
| (- 8 / - 5 km/h) | (+ 5 / + 8 km/h) |
| vitesse lente | vitesse rapide à la limite de la tolérance |

Au cas où la vitesse continuerait à ralentir (à partir de - 9 km/h), l'indication lumineuse verte commence à clignoter avec arrêt du clignotement après quelques sec.
Au cas où la vitesse continuerait à augmenter (à partir de + 9 km/h), l'indication lumineuse rouge commence à clignoter.

| | |
|---|---|
| Vert clignotant | Rouge clignotant |
| (- x / - 9 km/h) | (+ 9 / + x km/h ) |
| vitesse très lente | vitesse rapide en dehors de la tolérance |

### - Indicateur acoustique de surveillance de la vitesse

### Cas A + B

Le signal acoustique retentit lorsque la vitesse dépasse toutes les tolérances admises (à partir de + 12 km/h par exemple) avec arrêt du signal après quelques secondes.

| |
|---|
| Signal acoustique |
| (+ 12/ + x km/h) |
| vitesse très rapide très en dehors de la tolérance |

### MONTAGE ET DISPOSITION DE L'APPAREIL:

### Cas A) : Véhicules existants Figure 1 / page 9

### MONTAGE DE L'APPAREIL:

L'appareil avec les touches d'introduction des vitesses limites et les indications lumineuses et acoustiques se présente sous la forme d'un boîtier avec tous les éléments groupés à l'intérieur.

Le boîtier est fixé à l'aide d'un support adaptable.
Le support peut-être monté directement :
- sur le tableau de bord avec des vis ou par collage
- sur le pare-brise avec une ventouse ou par collage

### MONTAGE DU CAPTEUR:

1) Véhicules avec compteurs à câble:
   - le capteur est monté directement entre l'arrivée du câble du compteur de vitesses et le compteur lui-même ou sur un élément en rotation après la boîte à vitesses du véhicule. 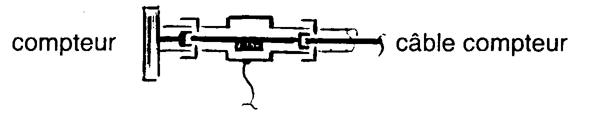
2) Véhicules avec compteurs électroniques:
   - le capteur est relié directement sur les bornes du compteur d'impulsions du compteur de vitesses existant du véhicule,

### Cas B) : Véhicules futurs Figure 2 / page 10

### MONTAGE DE L'APPAREIL:

L'appareil est totalement ou partiellement intégré dans le tableau de bord du véhicule avec les indicateurs lumineux plus l'indicateur digital de vitesse limite plaçés bien en vue (derrière le volant par exemple) et les touches d'introduction des vitesses limites situées de façon facilement atteignable (à droite du volant par exemple).

### MONTAGE DU CAPTEUR:

Le capteur d'impulsions ou le transmetteur est monté directement sur l'instrumention de mesure de vitesses du véhicule.

### AVANTAGES DE L'APPAREIL "SPEED CONTROL"

Cette appareil à l'avantage de faciliter le chauffeur dans la surveillance de la vitesse limite admise du véhicule, sans avoir le regard en continu sur le compteur.
Le chauffeur est informé continuellement sur l'état de la vitesse effective de son véhicule par rapport à la vitesse limite autorisée.
Cette appareil permettra d'éviter d'être en infraction avec la loi sur la circulation routière et d'éviter ainsi de coûteuses amendes.

### ANTERIORITE

Une recherche d'antériorité au niveau européen n'a rien apporté de directement similaire dans ce secteur.

Un système actuellement sur le marché ne permet qu'un avertissement par une indication lumineuse unique plus un signal acoustique lorsque la vitesse limite introduite est atteinte sans indication des écarts de tolérance. L'introduction des vitesses ne peut se faire qu'à l'aide de deux touches pour augmenter ou réduire la vitesse à contrôler.

## Revendications

Cas A) : Véhicules existants / Figure 1, page 9
Cas B) : Véhicules futurs / Figure 2, page 10

Cette appareil est caractérisé par les points ci-dessous:

1. Cas A + B
- **Interrupteur** de mise en service ou hors service de l'appareil.

2. Cas A + B
- **Capteur d'impulsions ou transmetteur de mesure** (Volts ou Ampères)
1) Véhicules avec compteurs à câble:
- le capteur ou transmetteur est monté directement entre l'arrivée du câble du compteur de vitesses et le compteur lui-même ou sur un élément en rotation après la boîte à vitesses.
2) Véhicules avec compteurs électroniques:
- utilisation du capteur d'impulsions du compteur de vitesses existant du véhicule,

3. Cas A + B
- **Intégrateur et calculateur de vitesses.**
Module électronique de transformation des impulsions ou des valeurs électriques en vitesses (km/h ou milles/h) et pour la calculation des écarts avec la vitesse introduite.

4. Cas A + B
- **Système d'introduction manuelle par touches et de mémorisation de la dernière valeur de la vitesses maximum autorisées (km/h ou milles/h).**
Les touches peuvent être aussi remplacées par des sensors, boutons ou curseurs.
Le dispositif est composé de deux systèmes d'introduction et de mémorisation:
- touches vitesses fixes : localités / routes départementales / autoroutes (valeurs programmables sur l'appareil selon pays).
- touches vitesses variables : 10 à 130 km/h ou plus.

5. Cas A + B
- **Affichage digital ou analogique** de la vitesse limite à contrôler.

6. Cas A + B
- **Bouton de synchronisation** de la vitesse au compteur de la voiture et la vitesse indiquée sur l'affichage de l'appareil.

7. Cas A + B (seulement sur version luxe)
- **Synthétiseur vocal** de la dernière valeur de la vitesse limite introduite avec sélecteur de langues et réglage du volume.

8. Cas A + B (seulement sur version luxe)
- **Sélecteur de langues** pour le synthétiseur vocal

9. Cas A + B
- **Indicateurs lumineux + clignotants** combinés de différentes couleurs d'avertissement des écarts de vitesse entre la vitesse limite mémorisée et la vitesse effective du véhicule.
| | |
|---|---|
| au centre | |
| (lumière jaune) | |
| tolérance admise | |
| à gauche | à droite |
| (lumière verte) | (lumière rouge) |
| *tolérance inférieure* | *tolérance supérieure* |
| (lumière verte clignotante) | (lumière rouge clignotante) |
| *tolérance très inférieure* | *tolérance très supérieure* |
| arrêt du clignotement après quelques secondes | |

10. Cas A + B
- **Indicateur acoustique** d'avertissement des écarts de vitesses hors tolérances.
| |
|---|
| (signal acoustique) |
| vitesse très rapide très en dehors de la tolérance |
